(19) Europäisches Patentamt
European Patent Office
Office européen des brevets

(11) Publication number : 0 456 349 A2

(12) # EUROPEAN PATENT APPLICATION

(21) Application number : 91303000.3

(51) Int. Cl.[5] : C22C 1/04, C08G 75/02

(22) Date of filing : 05.04.91

(30) Priority : 09.04.90 JP 92180/90
16.05.90 JP 124173/90
06.03.91 JP 63839/91

(43) Date of publication of application :
13.11.91 Bulletin 91/46

(84) Designated Contracting States :
AT BE CH DE FR GB IT LI NL

(71) Applicant : TOSOH CORPORATION
4560, Kaisei-cho
Shinnanyo-shi Yamaguchi-ken (JP)

(72) Inventor : Kato, Masatoshi
7-3, Higashiyama-cho
Tokuyama-shi, Yamaguchi (JP)
Inventor : Inoue, Hiroshi
5-8, Betsumei 3-chome
Yokkaichi-shi, Mie (JP)
Inventor : Kato, Toshikazu
5-1, Betsumei 3-chome
Yokkaichi-shi, Mie (JP)

(74) Representative : Beresford, Keith Denis Lewis et al
BERESFORD & Co. 2-5 Warwick Court High Holborn
London WC1R 5DJ (GB)

(54) **Corrosion-resistant material for sulfur-containing alkali metal salts and equipment for producing polyarylene sulfide using the same, and polyarylene sulfide and process for producing the same.**

(57) A corrosion-resistant material against sulfur-containing alkali metal salt which comprises high purity metallic chromium having a relative density of 95% or higher and a purity of 99.7% or higher and equipment for production of polyarylene sulfides which is composed of such a corrosion-resistant material, and a polyarylene sulfide containing substantially no heavy metal and a process for producing such a polyarylene sulfide comprising reacting an alkali metal sulfide and a dihalogenated aromatic compound in a polar aprotic solvent by using equipment made of high purity chromium having a purity of 99.7% or higher and having a relative density of 95% or higher at least at parts in contact with a liquid are disclosed.



Jouve, 18, rue Saint-Denis, 75001 PARIS

## FILED OF THE INVENTION

This invention relates to a corrosion-resistant material suitable as a material of equipment in contact with a solution of various alkali metal salts containing sulfur and equipment for producing a polyarylene sulfide (hereinafter abbreviated as PAS) which is made of such a corrosion-resistant material, and PAS substantially containing no heavy metal and a process for producing PAS by reacting an alkali metal sulfide and a dihalogenated aromatic compound in a polar aprotic solvent.

## BACKGROUND OF THE INVENTION

The corrosion-resistant material of this invention can be used as a corrosion-resistant material for various kinds of equipment. The equipment to which the corrosion-resistant material of this invention is applicable embraces distillation towers, evaporators, heat exchangers, pipes, tanks, etc. in the chemical plant. The corrosion-resistant material of the invention is particularly effective as a basic material or a cladding or lining material of such equipment as well as a vessel for sodium-sulfur electric cell and lithium-iron sulfide electric cell.

PAS has recently attracted attention as electric and electronic materials and automobile materials because of its excellent heat resistance and chemical resistance. Besides, PAS can be molded into various shapes, films, sheets, fibers, etc. by injection molding or extrusion molding for use in a wide range of applications. In these applications, PAS of extremely high purity has been demanded. Accordingly, PAS containing substantially no heavy metal according to this invention is expected to be highly valuable for use in these fields.

Typical processes for producing PAS include a process comprising reacting an alkali metal sulfide and an aromatic halogen compound, for example, a process in which an alkali metal sulfide hydrate and a dihalogenated aromatic compound are reacted in an aprotic polar organic solvent by use of equipment made of general-purpose austenite stainless steel (e.g., SUS 304, SUS 316). In this process, an alkali metal halide which is by-produced together with PAS is soluble in solvents, e.g., water, so that it can be removed in the course of working-up procedures, such as phase separation, extraction or washing of PAS with water or a like solvent. However, during the reaction, a sulfide used as a part of the reactant is reacted with a reactor material to form a metal sulfide, e.g., iron sulfide and nickel sulfide. Since the by-produced metal sulfide is insoluble in solvents, it is hardly removed by the subsequent working-up procedures and unavoidably remains in the produced PAS. PAS containing such a metal sulfide is excluded from use where high functional performance is required, such as supports of magnetic recording materials.

In addition, incorporation of a heavy metal sulfide into PAS causes a change in color tone of the product, and also PAS produced under such an environment is inferior in heat stability.

In an attempt to solve the problem of contamination with metal sulfides, it has been proposed to produce PAS by using equipment made of titanium as disclosed in JP-A-61-23627 (the term "JP-A" as used herein means an "unexamined published Japanese patent application"). With Ti-made equipment, incorporation of a sulfide of iron, chromium, nickel, etc. into PAS as having been observed with conventional stainless steel-made equipment can be prevented. It turned out, nevertheless, that a Ti component is incorporated into PAS, which adversely affects electrical characteristics. Thus, it has been impossible to obtain substantially heavy metal-free PAS by conventional techniques.

The amount of oligomers present in PAS produced with Ti-made equipment is reduced to some extent as compared with that produced with general-purpose austenite stainless steel-made equipment but not to a satisfactory extent.

Moreover, conventional equipment for PAS production undergoes corrosion at parts to which PAS is liable to adhere, e.g., a dehydrator, a purification tank, and carrying pipes, making it impossible to continue operation in a stable manner for a long time.

## SUMMARY OF THE INVENTION

An object of the present invention is to provide a corrosion-resistant material suitable as a material of equipment in contact with a solution of various alkali metal salts containing sulfur, which exhibits excellent corrosion resistance and durability and undergoes no corrosion cracking even at parts under influences of heat.

Another object of the present invention is to provide equipment for production of PAS which is made of the above-described corrosion-resistant material.

A further object of the present invention is to provide a process for producing PAS containing substantially no heavy metal by using the above-described equipment and reacting an alkali metal sulfide and a dihalogenated aromatic compound in a polar aprotic solvent.

A still further object of the present invention is to provide PAS produced by the above-described process,

which is not contaminated with heavy metals.

That is, the present invention relates to a corrosion-resistant material against a sulfur-containing alkali metal salt which comprises high purity metallic chromium having a relative density of 95% or higher and a purity of 99.7% or higher.

The present invention also relates to equipment for production of PAS which comprises reacting an alkali metal sulfide and a dihalogenated aromatic compound in a polar aprotic solvent, said equipment being composed of high purity metallic chromium having a relative density of 95% or higher and a purity of 99.7% or higher.

The present invention further relates to a process for producing PAS comprising reacting an alkali metal sulfide and a dihalogenated aromatic compound in a polar aprotic solvent, in which equipment used is comprised of high purity chromium having a relative density of 95% or higher and a purity of 99.7% or higher at least at parts in contact with a liquid.

The present invention furthermore relates to PAS containing substantially no heavy metal, which is produced by the above-described process.

## DETAILED DESCRIPTION OF THE INVENTION

The sulfur-containing alkali metal salt as referred to herein in this invention includes, for example, sulfides such as $Na_2S$, KSH, and $K_2S$, and materials which incorporate thereinto include alkalis such as NaOH and KOH.

The high purity chromium material must have a relative density of 95% or higher. If the relative density is less than 95%, sufficient strength, workability and corrosion resistance cannot be obtained. At the same time, the metallic chromium must have a purity of 99.7% or higher. Metallic chromium of lower purity, i.e., containing more than 0.3% of impurities not only has reduced workability and easily develops cracks during rolling but also undergoes considerable deterioration on welding. The terminology "relative density" as used herein means a value obtained from a measured density obtained in a usual manner and a theoretical density of chromium according to equation:

$$\text{Relative Density (\%)} = \frac{\text{Measured Density}}{\text{Theoretical Density}} \times 100$$

In addition to the above-specified conditions, it is desirable that a chromium rolled sheet has a tensile strength of 20 $kg/mm^2$ or more.

The corrosion-resistant material according to the present invention can be used in place of materials conventionally employed as tanks, reactors, heat exchangers, pipes, and so on. What is more characteristic of the corrosion-resistant material of the invention is that it is also fit for use as a cladding material or a lining material to which conventional high chromium-based alloys could not be applied in view of workability. As a matter of course, the corrosion-resistant material of the invention should not be lmited to the use for only chemical plant.

In the production of the corrosion-resistant material of the invention, it is preferable to use high purity metallic chromium powder (purity: 99.7% or higher) as a raw material. Such high purity metallic chromium powder can be obtained by grinding metallic chromium obtained by electrolysis of a chromium salt solution or metallic chromium obtained by purifying a chromium salt solution by solvent extraction, oxidizing the resulting chromium salt solution or a chromium salt isolated therefrom, and reducing the chromium oxide by hydrogen reduction, etc.

The thus prepared metallic chromium powder is sealed into, for example, a vacuum- and heat-resistant vessel. Although the vessel to be used is not strictly limited in material and shape, economical consideration recommends a stainless steel-made or copper-made vessel.

The shape of the vessel is appropriately decided according to a desired shape of a rolled shape. The vessel into which the metallic powder is sealed is evacuated to $10^{-5}$ mmHg, and the powder is then hot rolled at a temperature of from 600 to 1000°C by means of a grooved roll. General-purpose grooved rolls may be employed, and two-stage rolling mill is usually used. Within the above-recited rolling temperature range, solid solubility of nitrogen into metallic chromium is suppressed to 3 to 17 ppm. A rolling degree is preferably set in the range of from 50 to 80% in favor of a dense structure. Cooling after hot rolling is preferably effected gradually. Should the cooling be rapid, there is a fear that thermal stress is non-uniformly imposed to the internal chromium structure to cause cracks.

The resulting rolled shape is then subjected to annealing at a temperature of from 800 to 1000°C to homogenize and soften the structure. While not limiting, the annealing time is usually 1 hour or longer.

A process for producing the corrosion-resistant material of the present invention is not limited to the above-described process. For example, the corrosion-resistant material may be obtained by once preparing an ingot by various melting methods using a high-frequency atmosphere furnace or a high-frequency arc furnace and subjecting the ingot to plastic working such as hot rolling.

PAS production by the use of the equipment made of the above-described material will be explained below. Processes for producing PAS and steps involved therein with which the present invention is concerned are in accordance with known techniques as disclosed, e.g., in JP-B-45-3368, in which an alkali metal sulfide and a dihalogenated aromatic compound are reacted in a polar aprotic solvent.

Examples of suitable alkali metal sulfides are lithium sulfide, sodium sulfide, potassium sulfide, rubidium sulfide, cesium sulfide, and mixtures thereof, either in an anhydrous form or in a hydrated form. These alkali metal sulfides are obtained by the reaction between an alkali metal hydrosulfide and an alkali metal base or between hydrogen sulfide and an alkali metal base. An alkali metal sulfide may be prepared in situ prior to addition of a dihalogenated aromatic compound to a polymerization system, or a previously prepared alkali metal sulfide may be used. Of the above-mentioned alkali metal sulfides, preferred is sodium sulfide. Commercially available 60% pure sodium sulfide hydrate, $Na_2S{\cdot}5H_2O$, anhydrous $Na_2S$ prepared by heating a hydrate, e.g., $Na_2S{\cdot}9H_2O$, under reduced pressure (see U.S. Patent 2,533,163), and anhydrous sodium sulfide single crystal disclosed in JP-A-64-28207 are also useful.

In carrying out polymerization reaction between the above-described alkali metal sulfide and a dihalogenated aromatic compound, it is preferable that a water content in the polymerization system be controlled not to exceed about 4 mole per mol of the alkali metal sulfide. The water content may be adjusted during polymerization by distillation and the like.

Examples of suitable dihalogenated aromatic compounds include p-dichlorobenzene, m-dichlorobenzene, o-dichlorobenzene, p-dibromobenzene, p-diiodobenzene, dichloronaphthalene, dibromonaphthalene, dichlorodiphenyl sulfone, dichlorobenzophenone, dichlorodiphenyl ether, dichlorodiphenyl sulfide, dichlorodiphenyl, dibromodiphenyl, dichlorodiphenyl sulfoxide, 2,6-dichlorobenzonitrile, 1,4-N,N'-(bis-4-chlorophenylcarbamoyl)benzene, and mixtures thereof. Of these compounds, p-dihalobenzene compounds are preferred, with p-dichlorobenzene being particularly suitable. If desired, these dihalogenated aromatic compounds may be used in combination with polyhalogenated aromatic compounds containing three or more halogen atoms per molecule, e.g., trichlorobenzene, tribromobenzene, triiodobenzene, tetrachlorobenzene, trichloronaphthalene, and tetrachloronaphthalene.

As polymerization solvents, polar solvents are preferred. In particular, solvents which are aprotic and stable to alkalis in high temperatures are more preferred. Such preferred solvents include N,N-dimethylacetamide, N,N-dimethylformamide, hexamethylphosphoramide, N-methyl-ε-caprolactam, N-ethyl-2-pyrrolidone, N-methyl-2-pyrrolidone(hereinafter abbreviated as NMP), 1,3-dimethylimidazolidinone, dimethyl sulfoxide, sulfolane, tetramethylurea, and mixtures thereof.

Polymerization is carried out usually at a temperature of from 200 to 300°C, and preferably from 220 to 280°C, for a period of from 0.5 to 30 hours, and preferably from 1 to 15 hours, under stirring.

The alkali metal sulfide and the dihalogenated aromatic compound are preferably used at a molar ratio of from 1.00:0.90 to 1.00:1.10. The polar aprotic solvent is used in such an amount that PAS produced may form a proportion of from 3 to 60% by weight, and preferably from 7 to 40% by weight, in the resulting reaction mixture.

With respect to the reaction between an alkali metal sulfide hydrate and a dihalogenated aromatic compound in a polar aprotic solvent, many modes have been proposed, and any of known modes of reaction can be utilized in the present invention without any restriction as long as equipment composed of high purity chromium satisfying the above-described conditions of purity and density is employed.

If desired, the thus obtained PAS may be compounded with reinforcing fillers, such as glass fibers, carbon fibers, ceramic fibers (e.g., alumina fibers), aramid fibers, wholly aromatic polyester fibers, metallic fibers, and potassium titanate whiskers; and inorganic fillers or organic or inorganic pigments, such as calcium carbonate, mica, talc, silica, barium sulfate, calcium sulfate, kaolin, clay, pyroferrite, bentonite, sericite, zeolite, nepheline syenite, attapulgite, wollastonite, PMF, ferrite, calcium silicate, magnesium carbonate, dolomite, antimony trioxide, zinc oxide, titanium oxide, magnesium oxide, iron oxide, molybdenum disulfide, graphite, gypsum, glass beads, glass powder, glass balloon, quartz, and quartz glass.

Glass fibers which can be used include chopped strands having a fiber length of 1.5 to 12 mm and a fiber diameter of 3 to 24 μm, milled fibers having a fiber diameter of 3 to 8 μm, and glass flakes or powders of 325 mesh or smaller.

If desired, PAS may also be compounded with other additives, such as plasticizers or releasing agents, e.g., aromatic hydroxy derivatives; coupling agents, e.g., silane coupling agents and titanate coupling agents; lubricants, thermal stabilizers, weather stabilizers, nucleating agents, expanding agents, rust inhibitors, ion trapping agents, flame retardants, flame retardant assistants, and the like.

If desired, PAS may further be compounded with thermoplastic elastomers (e.g., those of olefin type,

styrene type, urethane type, ester type, fluorine type, amide type, and acryl type), polyethylene, polypropylene, rubber components (e.g., polybutadiene, polyisoprene, polychloroprene, polybutene, a styrene-butadiene rubber and hydrogenated products thereof, an acrylonitrile-butadiene rubber, an ethylene-propylene copolymer, an ethylene-propylene-ethylidene-norbornene copolymer), polyamide resins (e.g., nylon 6, nylon 66, nylon 610, nylon 12, nylon 11, nylon 46), polyester resins (e.g., polyethylene terephthalate, polybutylene terephthalate), polystyrene, poly(α-methylstyrene), polyvinyl acetate, polyvinyl chloride, polyacrylates, polymethacrylates, polyacrylonitrile,other polyolefins,polyurethane,polyacetal, polycarbonate, polyphenylene oxide, polysulfone, polyether sulfone, polyallyl sulfone, polyphenylene sulfide sulfone, polyether ketone, polyether ether ketone, polyphenylene sulfide ketone, polyamide-imide, silicone resins, phenoxy resins, fluorine resins, and resins capable of melt processing to form an anisotropic molten phase; and mixtures of these polymers or modified polymers thereof.

The equipment for PAS production as referred to in the present invention embraces reactors, evaporators, dehydrators, purification towers, carrying pipes, reservoirs, etc.

According to the present invention, since the PAS production system can be prevented from contamination with heavy metals resulting from corrosion of equipment materials, PAS of extremely high purity with a reduced amount of oligomers can be obtained. Therefore, the PAS of the present invention provides injection molded or extrusion molded articles excellent in color tone, heat stability, and electrical characteristics; films excellent in color tone, heat stability, surface smoothness, and electrical characteristics; or fibers excellent in color tone, heat stability, and strength.

The heavy metal-free PAS of the present invention can be prepared by a process comprising reacting an alkali metal sulfide and a dihalogenated aromatic compound in a polar aprotic solvent, in which equipment used is comprised of high purity chromium having a relative density of 95% or higher and a purity of 99.7% or higher at least at parts in contact with a liquid.

PAS according to the present invention is characterized by containing substantially no heavy metal. The term "heavy metal" as used herein means metals having a specific gravity of 4.0 or more and includes, for example, iron, manganese, chromium, copper, lead, molybdenum, cobalt, nickel, and titanium. The terminology "substantially no heavy metal" as used herein means that a total heavy metal content in PAS is not more than 10 ppm, preferably not more than 5 ppm, and more preferably less than 0.5 ppm.

PAS of the present invention is a polymer predominantly comprising a repeating unit represented by any of formulae (1) to (6) shown below, in which the aromatic residues are linked via a thioether linkage:

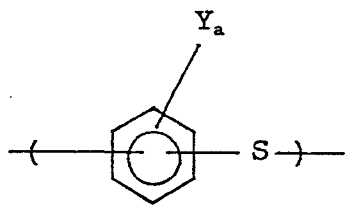

(1)

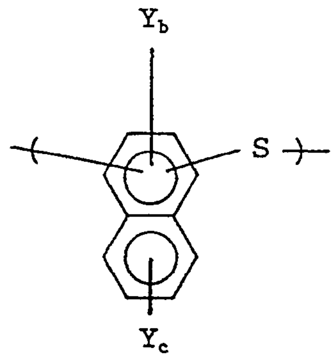

(2)

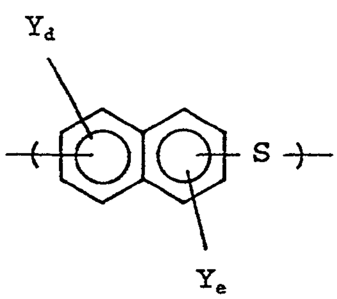

(3)

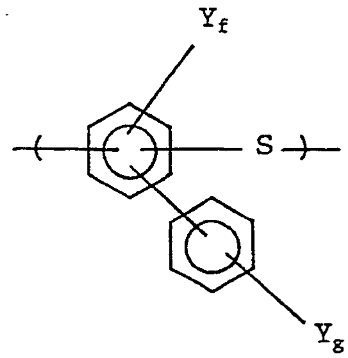

(4)

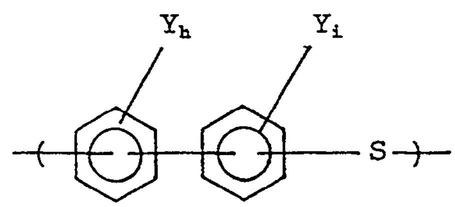

(5)

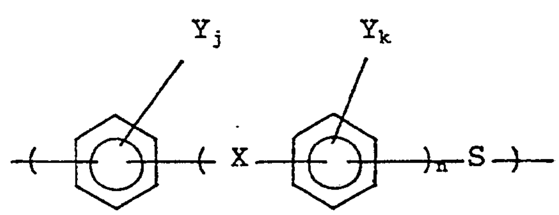

(6)

wherein Y represents -R, -OR, -OM, -COOR, -COOM, $-NR_2$, $-CONR_2$, or -CN, wherein R represents a hydrogen atom, an alkyl group having from 1 to 24 carbon atoms, or a cycloalkyl, aryl or aralkyl group having from 6 to 24 carbon atoms, and M represents an alkali metal; X represents -CO-, $-CONR^1-$, -O-, -S-, -SO-, $-SO_2-$, $-CR^2R^3-$, wherein $R^1$, $R^2$, and $R^3$ each represent a hydrogen atom, an alkyl group having from 1 to 24 carbon atoms, or a cycloalkyl, aryl or aralkyl group having from 6 to 24 carbon atoms; a represents an integer of from 0 to 4; b represents an integer of from 0 to 2; c represents an integer of from 0 to 4; d represents an integer of from 0 to 3; e represents an integer of from 0 to 3; f represents an integer of from 0 to 3; g represents an integer of from 0 to 5; h represents an integer of from 0 to 4; i represents an integer of from 0 to 4; j represents an integer of from 0 to 4; k represents an integer of from 0 to 4; and n represents an integer of from 1 to 3.

PAS of the invention may be either a homopolymer comprising one of the repeating units represented by formulae (1) to (6) or a copolymer comprising two or more of them. The copolymer PAS may be a random copolymer or a block copolymer. Further, PAS may be a linear polymer or may have a branched or crosslinked structure resulting from copolymerization of a polyhalogenated aromatic compound containing three or more halogen atoms per molecule or heat-curing in air.

Some examples of the above-described PAS include poly(p-phenylene sulfide) as disclosed in JP-B-45-3368 and JP-B-52-12240 (the term "JP-B" as used herein means an "examined published Japanese patent application"); polyphenylene sulfide ketone as disclosed in Indian Journal of Chemistry, Vol. 21, p. 501 (1982); polyphenylene sulfide sulfone as disclosed in JP-B-53-25880; polybiphenylene sulfide as disclosed in JP-B-45-3368; and polyphenylene sulfide amide as disclosed in JP-A-63-83135.

PAS of the present invention suitably has a weight average molecular weight of from 10,000 to 500,000 as measured by means of a gel permeation chromatograph (hereinafter abbreviated as GPC). For example, weight average molecular weight of poly(p-phenylene sulfide) can be determined by means of GPC at 210°C using 1-chloronaphthalene as a solvent.

Accordingly, the PAS of the present invention is of great practical utility owing to its freedom from heavy

metals.

The equipment for PAS production of the present invention is expected to have an extended working life because of its remarkable corrosion resistance even under conditions which easily induce corrosion of the conventional materials, such as stainless steel, Ti, or chromium plated materials.

The present invention is now illustrated in greater detail with reference to Examples, but it should be understood that the present invention is not deemed to be limited thereto.

Molecular weight of poly(p-phenylene sulfide) (hereinafter abbreviated as PPS) was measured with an ultra-high temperature GPC equipped with a W detector at 210°C in a 1-chloro-naphthalene solvent and calculated from the calibration curve of polystyrene as a standard.

Molecular weight of polyphenylene sulfide ketone (hereinafter abbreviated as PPSK) was measured with a GPC equipped with an RI detector at room temperature in a mixed solvent of p-chlorophenol and chloroform (15:8 by weight) and calculated from the calibration curve of polystyrene as a standard.

Molecular weight of polyphenylene sulfide sulfone (hereinafter abbreviated as PPSS) was measured with a GPC equipped with an RI detector at room temperature in a mixed solvent of phenol and 1,1,2,2-tetrachloroethane (3:2 by weight) and calculated from the calibration curve of polystyrene as a standard.

EXAMPLE 1 AND COMPARATIVE EXAMPLE 1

Corrosion-resistant materials (Sample Nos. 1 to 3) and comparative materials (Sample Nos. 4 to 8) having the composition, relative density and tensile strength as shown in Table 1 below were produced as follows.

Metallic chromium powder having a purity of 99.7% or more having the composition shown in Table 1 was sealed into a stainless steel-made vessel. The vessel was evacuated to $10^{-5}$ mmHg. The powder was subjected to hot rolling using a grooved roll at 800°C to a final rolling degree of 70%, and the resulting rolled sheet was subjected to annealing at 1000°C for 1 hour. A test piece (2 cm x 3 cm) was cut out of the rolled sheet. A test piece of the same size was cut out of SUS 304 (Sample No. 8), Ti (Sample No. 7) or Ni (Sample No. 6) whose composition is shown in Table 2. In Tables 1 and 2, the remainder of the composition shown therein comprised other impurities.

Each test piece was dipped in a solution shown in Table 3 below to determine an average rate of corrosion. The results obtained are shown in Table 3.

As can be seen from Table 3, materials of low purity had poor corrosion resistance, and cracks developed after the testing in test pieces having a low relative density.

TABLE 1

| Sample No. | Composition Cr (%) | O (%) | N (%) | Relative Density (%) | Tensile Strength ($kg/mm^2$) |
|---|---|---|---|---|---|
| 1 | 99.91 | 0.04 | 0.03 | 96 | 30.5 |
| 2 | 99.94 | 0.03 | 0.02 | 98 | 31 |
| 3 | 99.93 | 0.03 | 0.03 | 99 | 32 |
| 4 | 99.91 | 0.04 | 0.03 | 91 | 10.5 |
| 5 | 98.10 | 0.08 | 0.05 | 96 | 31 |

TABLE 2

| Sample No. | Composition Cr (%) | Ni (%) | Ti (%) | Fe (%) |
|---|---|---|---|---|
| 6 | | 99.9 | | |
| 7 | | | 99.9 | |
| 8 | 17.9 | 7.6 | | 74.2 |

TABLE 3

| Sample No. | Rate of Corrosion at 130°C (mm/year) 60% $Na_2S$ | 40% $Na_2S$ 20% NaOH | 10% KSH 40% KOH |
|---|---|---|---|
| 1 | <0.001 | <0.001 | <0.001 |
| 2 | <0.001 | <0.001 | <0.001 |
| 3 | <0.001 | <0.001 | <0.001 |
| 4 | 0.05 | 0.09 | 0.07 |
| 5 | 0.16 | 0.17 | 0.11 |
| 6 | >10 | >10 | >10 |
| 7 | 0.1 | 0.4 | 0.5 |
| 8 | >10 | >10 | >10 |

## EXAMPLE 2 AND COMPARATIVE EXAMPLE 2

A crucible was prepared from a chromium plate having a relative density of 99% and a purity of 99.8% in the same manner as in Example 1. A 60% $Na_2S$ aqueous solution was concentrated in the crucible at a temperature between 130 and 150°C for 10 hours, and the amount of chromium dissolved into the $Na_2S$ solution was measured by ICP (induced coupling plasma). For comparison, the same test was carried out using a crucible made of Ti.

The amount of chromium dissolved from the Cr crucible was found to be not more than 1 ppm, while the

amount of titanium dissolved from the Ti crucible was 500 ppm.

EXAMPLE 3 AND COMPARATIVE EXAMPLE 3

Metallic chromium powder having a purity of 99.7% or higher and containing impurities shown in Table 4 below was sealed into a stainless steel vessel, and the vessel was evacuated to $10^{-5}$ mmHg. The powder was then subjected to hot rolling by means of a grooved roll at 800°C to a final rolling degree of 70%, followed by annealing at 1000°C for 1 hour. A test piece of 2 cm x 3 cm was cut out of the resulting rolled sheet (Sample Nos. 9 to 13). A test piece of the same size was prepared from comparative materials, SUS 304 or Ti whose composition is shown in Table 5 below (Sample Nos. 14 and 15). In Tables 4 and 5, the remainder of the composition shown comprised other impurities.

Each test piece was fixed to a 2 ℓ-volume autoclave made of SUS 316. In the autoclave were charged 2.45 mole of $Na_2S \cdot 2.9H_2O$ and 600 mℓ of NMP, and the mixture was heated to 200°C while stirring in a nitrogen stream to thereby remove 90.8 mℓ of a distillate mainly comprising water. After cooling to 170°C, 2.4 mole of p-dichlorobenzene and 200 mℓ of NMP were added thereto, and the system was sealed in a nitrogen stream, followed by heating to 250°C to conduct polymerization for 3 hours. After completion of the polymerization, the system was cooled, and the reaction product was taken out. The above procedure was repeated 10 times.

The test piece was taken out of the system, and the rate of corrosion was determined. The result obtained is shown in Table 6 below.

TABLE 4

| Sample No. | Composition Cr (%) | O (%) | N (%) | Relative Density (%) | Tensile Strength ($kg/mm^2$) |
|---|---|---|---|---|---|
| 9 | 99.91 | 0.04 | 0.03 | 96 | 30.5 |
| 10 | 99.94 | 0.03 | 0.02 | 98 | 31.0 |
| 11 | 99.93 | 0.03 | 0.03 | 99 | 32.0 |
| 12 | 99.91 | 0.04 | 0.03 | 91 | 10.5 |
| 13 | 98.10 | 0.08 | 0.05 | 96 | 31.0 |

TABLE 5

| Sample No. | Composition Cr (%) | Ni (%) | Ti (%) | Fe (%) |
|---|---|---|---|---|
| 14 | | | 99.9 | |
| 15 | 17.9 | 7.6 | | 74.2 |

TABLE 6

| Sample No. | Rate of Corrosion (mm/year) |
|---|---|
| 9 | <0.001 |
| 10 | <0.001 |
| 11 | <0.001 |
| 12 | 0.05 |
| 13 | 0.06 |
| 14 | 0.08 |
| 15 | 0.51 |
| 16 (Example 4) | <0.001 |

As can be seen from the results in Table 6, corrosion of the equipment materials according to the present invention (Sample Nos. 9 to 11) is below a detection limit, proving marked corrosion resistance and durability of these materials. To the contrary, the chromium material of low purity (Sample No. 13) has poor corrosion resistance, and the chromium material, though highly pure, having a low relative density (Sample No. 12) underwent cracking after testing. Known materials (Sample Nos. 14 and 15) suffered local corrosion, turning out to be unsuitable as equipment material for PAS production.

EXAMPLE 4

Corrosion test was carried out in the same manner as in Example 3 by using a single crystal of anhydrous sodium sulfide prepared according to the process disclosed in JP-A-64-28207.

A test piece (2 cm x 3 cm) having the same composition as Sample No. 9 of Example 3 was fixed to a 2 ℓ-volume autoclave made of SUS 316, and polymerization was conducted under the following conditions.

In the autoclave were charged 2.45 mole of anhydrous $Na_2S$ single crystal (purity: 99.42%), 2.45 mole of p-dichlorobenzene, 1.23 mole of water, and 800 mℓ of NMP. After sealing the autoclave in a nitrogen stream, the mixture was heated to 225°C to polymerize for 2 hours. The temperature was elevated up to 250°C, and polymerization was continued at that temperature for an additional 3 hours. After completion of the polymerization, the system was cooled, and the reaction product was taken out. The above procedure was repeated 10 times.

The test piece was taken out of the system, and the rate of corrosion was determined. The result obtained are shown in Table 6 as Sample No. 16.

As is apparent from Table 6, the equipment material of the present invention undergoes no corrosion even under very severe conditions using anhydrous $Na_2S$, proving markedly resistant to corrosion and markedly durable.

EXAMPLE 5

A cylinder made of high purity chromium having the same composition as Sample No. 9 was fixed to a 500 mℓ-volume autoclave as an inner cylinder, and PPS was produced using the autoclave under the following conditions.

In the autoclave were charged 0.6 mole of $Na_2S.2.9H_20$ and 150 mℓ of NMP. The mixture was heated up to 215°C with stirring in a nitrogen stream to remove 23.0 mℓ of a distillate mainly comprising water. After cooling the system to 150°C, 0.6 mole of p-dichlorobenzene and 50 mℓ of NMP were added thereto, and the system was sealed in a nitrogen stream. The temperature was raised to 250°C to conduct polymerization for 3 hours.

After completion of the polymerization, the system was cooled, and the resulting product was poured into water. The precipitated polymer was collected by filtration and washed with about 5 ℓ of warm water. Filtration and washing with water were repeated to remove by-produced NaCℓ. The resulting wet cake was dried by heating at 100°C for one day under reduced pressure to isolate 61.6 g (yield: 95%) of PPS.

The resulting PPS had a weight average molecular weight (hereinafter abbreviated as Mw) of 33,000 as measured with GPC. Heavy metal contents were measured on Cr, Ni, Fe, and Ti by atomic-absorption spectroscopy and found to be below a detection limit (the terminology "below detection limit" as used here means that each heavy metal content is less than 0.5 ppm).

In order to determine an oligomer content, the product was extracted with methylene chloride for 8 hours by means of a Soxhlet apparatus, and a weight loss was measured. The results obtained are shown in Table 7 below.

It can be seen from Table 7 that PPS obtained by the use of the equipment material according to the present invention is free from contamination with heavy metals originated from the autoclave used and, at the same time, has a reduced oligomer content.

In order to evaluate heat stability, flow characteristics of the resulting PPS were examined by means of a KOHKA type flow tester (manufactured by Shimadzu Corporation) equipped with a die having a diameter of 0.5 mm and a length of 2 mm heated at 330°C. A ratio ($\eta_{30}/\eta_5$) of a melt viscosity after 30-minute preheating ($\eta_{30}$) to a melt viscosity after 5-minute preheating ($\eta_5$) was obtained as an indication of heat stability. The above prepared PPS had an $\eta_{30}/\eta_5$ of 1.05, indicating excellent heat stability.

Further, the resulting PPS was melt-pressed at 320°C for 30 seconds to prepare a 0.3 mm thick sheet. The PPS sheet had a degree of whiteness as high as 83 as determined with a color meter (manufactured by Suga Shikenki) (see Table 7).

EXAMPLES 6 AND 7

PPS was produced in the same manner as in Example 5, except for using a 500 mℓ-volume autoclave equipped with an inner cylinder made of high purity chromium having the same composition as Sample No. 10 or 11.

The yield, Mw, heavy metal content, heat stability, oligomer content, and degree of whiteness of the resulting PPS are shown in Table 7.

EXAMPLE 8

PPS was produced under the following conditions by using the same apparatus as used in Example 5.

In the autoclave were charged 0.6 mole of anhydrous $Na_2S$ single crystal (purity: 99.42%), 0.6 mole of p-dichlorobenzene, 0.3 mole of water, and 200 mℓ of NMP, and the system was sealed in a nitrogen stream. The system was allowed to polymerize at 225°C for 2 hours and then at 250°C for 3 hours. After completion of the polymerization, the system was cooled, and the reaction mixture was poured into water. The precipitated polymer was collected by filtration and washed with about 5 ℓ of warm water. The filtration and washing were repeated to remove by-produced NaCℓ, and the finally obtained wet cake was dried by heating at 100°C under reduced pressure for one day to obtain PPS.

The yield, Mw, heavy metal content, heat stability, oligomer content, and degree of whiteness of the resulting PPS are shown in Table 7.

EXAMPLE 9

PPSK was prepared under the following conditions by using the same apparatus as used in Example 5.

In the autoclave were charged 0.166 mole of $Na_2S.2.8H_2O$, 0.168 mole of 4,4'-dichlorobenzophenone, and 200 mℓ of NMP, and the system was sealed in a nitrogen stream. The temperature was elevated to 260°C to conduct polymerization for 1.5 hours. After completion of the polymerization, the system was cooled, and the reaction product was poured into water. The precipitated polymer was collected by filtration and washed with about 5 ℓ of warm water. The filtration and washing were repeated to remove by-produced NaCℓ, and the finally obtained wet cake was dried by heating at 100°C under reduced pressure for one day to isolate PPSK.

The yield, Mw, heavy metal content and heat stability of the resulting PPSK are shown in Table 7 below.

EXAMPLE 10

PPSS was prepared under the following conditions by using the same apparatus as used in Example 5.

In the autoclave were charged 0.200 mole of $Na_2S.2.8H_2O$ 0.202 mole of 4,4'-dichlorodiphenyl sulfone, 2.0 mole of water, 0.100 mole of lithium acetate, and 200 mℓ of NMP, and the system was sealed in a nitrogen stream. The temperature was elevated to 200°C to conduct polymerization for 5 hours. After completion of the polymerization, the system was cooled, and the reaction product was poured into water. The precipitated polymer was collected by filtration and washed with about 5 ℓ of warm water. The filtration and washing were repeated to remove by-produced NaCℓ, and the finally obtained wet cake was dried by heating at 100°C under reduced pressure for one day to isolate PPSS.

The yield, Mw, heavy metal content, heat stability, and degree of whiteness of the resulting PPSS are shown in Table 7.

## COMPARATIVE EXAMPLES 4 TO 7

PPS was prepared in the same manner as in Example 5, except for using a 500 mℓ-volume autoclave equipped with an inner cylinder made of the same material of Sample Nos. 12 to 15 shown in Tables 4 and 5.

The yield, Mw, heavy metal content, heat stability, oligomer content, and degree of whiteness of the resulting PPS are shown in Table 7.

It can be seen from Table 7 that PPS obtained by using equipment made of materials other than the corrosion-resistant material according to the present invention are contaminated with heavy metals originated from the autoclave used and inferior in heat stability and degree of whiteness.

TABLE 7

| Example No. | PAS Reactor Material | PAS Kind | PAS Yield (%) | Mw ($x10^4$) | Content of Heavy Metal Cr (ppm) | Ni (ppm) | Fe (ppm) | Ti (ppm) | Oligomer Content (%) | Heat Stability[1] ($\eta_{30}/\eta_5$) | Degree of Whiteness |
|---|---|---|---|---|---|---|---|---|---|---|---|
| Example 5 | No. 9 | PPS | 95 | 3.3 | ND[2] | ND | ND | ND | 1.8 | 1.05 | 83 |
| " 6 | No. 10 | PPS | 94 | 3.6 | ND | ND | ND | ND | 1.3 | 1.01 | 85 |
| " 7 | No. 11 | PPS | 94 | 3.5 | ND | ND | ND | ND | 2.1 | 0.98 | 85 |
| " 8 | No. 9 | PPS | 93 | 4.3 | ND | ND | ND | ND | 1.0 | 1.02 | 84 |
| " 9 | No. 9 | PPSK | 98 | 4.2 | ND | ND | ND | ND | -[3] | 1.06[4] | -[3] |
| " 10 | No. 9 | PPSS | 99 | 18.7 | ND | ND | ND | ND | -[3] | 1.00[5] | 80[6] |
| Comparative Example 4 | No. 12 | PPS | 96 | 3.4 | 20 | ND | ND | ND | 2.6 | 0.85 | 78 |
| " 5 | No. 13 | PPS | 95 | 3.2 | 29 | ND | ND | ND | 2.8 | 0.84 | 76 |
| " 6 | No. 14 | PPS | 95 | 3.3 | ND | ND | ND | 37 | 2.5 | 0.79 | 73 |
| " 7 | No. 15 | PPS | 92 | 3.3 | 180 | 140 | 690 | ND | 3.9 | 0.71 | 58 |

[Note]

1) ($\eta_{30}/\eta_5$) on preheating at 380°C
2) Below detection limit
3) Not measured
4) ($\eta_{15}/\eta_5$) on preheating at 380°C
5) ($\eta_{15}/\eta_5$) on preheating at 340°C
6) Measurement was made on a film obtained by melt-pressing at 340°C

While the invention has been described in detail and with reference to specific examples thereof, it will be apparent to one skilled in the art that various changes and modifications can be made therein without departing from the spirit and scope thereof.

## Claims

1. A corrosion-resistant material characterised in that said material comprises high purity metallic chromium having a relative density of 95% or higher and a purity of 99.7% or higher.

2. A corrosion-resistant material resistant against sulfur-containing alkaline metal salts characterised in that said material comprises high purity metallic chromium having a relative density of 95% or higher and a purity of 99.7% or higher.

3. A process for the production of a corrosion-resistant material characterised in that said method comprises sealing chromium powder into a vessel, hot-rolling said powder to produce a rolled shape, annealing said rolled shape to homogenise and soften said shape.

4. A process according to claim 1 characterised in that the chromium powder has a purity of at least 99.7%.

5. A process according to claim 3 or 4, characterised in that said vessel is evacuated to $10^{-5}$ mmHg.

6. A process according to any of claims 3 to 5 characterised in that said powder is hot-rolled at a temperature of from 600°C to 1000°C by means of a grooved roll.

7. A process according to any of claims 3 to 6 characterised in that the annealing is carried out at a temperature of from 800°C to 1000°C.

8. A process for the production of a corrosion-resistant material characterised in that said process comprises preparing an ingot by melting chromium powder and subjecting said ingot to plastic working.

9. Apparatus for the production of a polyarylene sulfide by reacting an alkali metal sulfide and a dihalogenated aromatic compound in a polar aprotic solvent, said apparatus being composed of high purity metallic chromium having a relative density of 95% or higher and a purity of 99.7% or higher.

10. Apparatus according to claim 9 characterised in that said apparatus is a tank, a reactor, a heat exchanger or a pipe.

11. A process for the production of a polyarylene sulfide comprising reacting an alkaline metal sulfide and a dihalogenated aromatic compound in a polar aprotic solvent, characterised in that said process uses apparatus, said apparatus being composed of a high purity metallic chromium having a relative density of 95% or higher and a purity of 99.7% or higher.

12. A process according to claim 11 characterised in that said reaction is carried out at a temperature of from 200°C to 300°C for a period of from 0.5 to 30 hours.

13. A polyarylene sulfide containing substantially no heavy metals, produced by a process as claimed in claim 11.

14. A polyarylene sulfide according to claim 13 characterised in that the total heavy metal content in said polyarylene sulfide is not more than 10 ppm.

15. A polyarylene sulfide according to claim 13 characterised in that the total heavy metal content in said polyarylene sulfide is not more than 0.5 ppm.

16. A moulded article comprising a polyarylene sulfide as claimed in claim 13.